# FASCICULE DE BREVET EUROPEEN

(11) **EP 2 569 117 B1**
(45) Date de publication et mention de la délivrance du brevet: **04.07.2018**
(21) Numéro de dépôt: 11725146.2
(22) Date de dépôt: 10.05.2011
(51) Int. Cl.: B22C 7/02, B22D 17/22

(54) **OUTILLAGE D'INJECTION D'UNE PIÈCE**
AUSRÜSTUNG ZUM INJIZIEREN EINES TEILS
EQUIPMENT FOR INJECTING A PART

(30) Priorité: 11.05.2010 FR 1053665
(43) Date de publication de la demande: 20.03.2013
(73) Titulaire: Snecma, 75015 Paris (FR)
(72) Inventeur: BOUTHEMY, Philippe, F-77550 Moissy-Cramayel Cedex (FR); DILLENSEGER, Serge, F-77550 Moissy-Cramayel Cedex (FR); POURFILET, Patrick, F-77550 Moissy-Cramayel Cedex (FR); QUACH, Daniel, F-77550 Moissy-Cramayel Cedex (FR); VERGER, Jean-Louis, Martial, F-77550 Moissy-Cramayel Cedex (FR)
(74) Mandataire: Desaix, Anne
(86) Numéro de dépôt international: PCT/FR2011/051047
(87) Numéro de publication internationale: WO 2011/141674

(56) Documents cités:
- EP-A1- 0 013 511
- EP-A1- 1 980 343
- FR-A7- 2 331 939
- US-A1- 2003 015 308

## Description

La présente invention concerne un outillage d'injection d'une pièce, en particulier d'un modèle en cire.

Un tel modèle est utilisé dans un procédé de moulage en cire perdue, notamment pour le moulage d'aubes de turbine haute pression d'une turbomachine telle qu'un turboréacteur ou un turbopropulseur.

Selon ce procédé, on moule par injection une ou plusieurs aubes à l'aide d'un outillage d'injection comportant une empreinte correspondant à la forme du modèle à obtenir. Dans le cas où le modèle comporte des canaux de refroidissement, un noyau peut être utilisé. Dans ce cas, la cire est injectée dans l'empreinte, autour du noyau. Dans ce qui suit, nous supposerons qu'aucun noyau n'est utilisé et que le modèle est plein.

Les modèles en cire ainsi obtenus sont ensuite montés en grappe sur un support.

La grappe est alors trempée dans un bain de céramique, appelé barbotine, puis saupoudrée à l'aide d'une poudre de céramique (opération de stuccage). Le trempage et le stuccage sont répétés plusieurs fois, jusqu'à obtenir une couche suffisante de céramique formant une carapace autour de la grappe.

La cire est ensuite retirée de la carapace de céramique par passage de l'ensemble dans un autoclave où de la vapeur d'eau sous pression et à haute température fait fondre la cire (opération de décirage).

La carapace est alors cuite dans un four pour acquérir une résistance mécanique suffisante et servir de moule.

Du métal, par exemple un alliage à base de nickel, est ensuite coulé dans la carapace. Après refroidissement, la carapace est décochée puis les différentes pièces sont dégrappées, c'est-à-dire séparées de leur support commun.

Les pièces sont ensuite ébarbées, meulées, puis contrôlées.

Un outillage d'injection du modèle en cire comporte en général deux blocs empreintes dans lesquels sont ménagées des empreintes dont la forme après superposition des blocs empreintes correspond à celle de la pièce à mouler. L'un des blocs empreintes est équipé de moyens d'éjection de la pièce moulée comportant au moins un éjecteur déplaçable entre une position de moulage dans laquelle il se trouve à l'extérieur de l'empreinte correspondante et une position d'éjection dans laquelle il fait saillie à l'intérieur de l'empreinte. Dans la technique connue, les éjecteurs sont déplaçables le long d'une trajectoire rectiligne.

La pièce à mouler, par exemple une aube comporte une partie, par exemple une plateforme dont la surface radialement externe n'est pas plane mais courbe. Il en est de même pour le modèle en cire correspondant.

Lors de l'éjection du modèle hors de l'empreinte, la trajectoire rectiligne des éjecteurs ne suit pas la courbure de la plateforme du modèle et provoque une déformation de cette plateforme du modèle, avec un risque de rayure ou d'arrachage d'une partie de cette plateforme.

De tels outillages d'injection équipés d'éjecteurs rectilignes sont notamment connus des documents EP0013511, FR2331939 et EP1980343.

L'invention a notamment pour but d'apporter une solution simple, efficace et économique à ce problème.

A cet effet, elle propose un outillage d'injection d'une pièce, comportant deux blocs empreintes dans lesquels sont ménagées des empreintes dont la forme après superposition des blocs empreintes correspond à celle de la pièce à mouler, au moins l'un des blocs empreintes étant équipé de moyens d'éjection de la pièce moulée comportant au moins un éjecteur déplaçable entre une position de moulage dans laquelle il se trouve à l'extérieur de l'empreinte correspondante et une position d'éjection dans laquelle il fait saillie à l'intérieur de l'empreinte, caractérisé en ce que l'éjecteur est guidé en déplacement entre ses deux positions sur une trajectoire incurvée, par exemple en arc de cercle, dont la forme correspond à celle d'une partie de la pièce moulée à extraire de l'empreinte.

Ainsi, cette partie de la pièce n'est pas endommagée lors de son démoulage. Dans le cas où la trajectoire correspond à la courbure de la plateforme d'un modèle en cire d'une aube, cette plateforme n'est pas déformée ou endommagée au démoulage, ce qui permet ensuite une fabrication précise de l'aube et une diminution des reprises manuelles sur pièce métal.

Avantageusement, l'éjecteur a une forme incurvée.

Selon une autre caractéristique de l'invention, les deux blocs empreintes sont montés pivotants l'un par rapport à l'autre autour d'un axe, entre une position de moulage dans laquelle les deux blocs empreintes sont superposés et une position de démoulage dans laquelle les deux blocs empreintes sont écartés, et en ce que les moyens d'éjection comportent un support d'éjecteur dont une extrémité est montée pivotante autour de l'axe de pivotement des blocs empreintes et dont l'autre extrémité est équipée de l'éjecteur.

Préférentiellement, l'éjecteur est actionné à l'aide d'une came et/ou d'une poignée.

La rotation de la poignée ou de la came entraîne le déplacement de l'éjecteur.

Selon une possibilité de l'invention, la came est en appui contre une face d'un support de l'éjecteur, en un point écarté de l'axe de pivotement, de façon à soulever le support et l'éjecteur quand elle est déplacée en rotation.

De manière préférée, les moyens d'éjection comportent deux éjecteurs parallèles ou concentriques écartés l'un de l'autre.

De façon avantageuse, l'outillage d'injection comporte un bloc empreinte inférieur fixe et un bloc empreinte supérieur mobile, l'éjecteur étant disposé dans le bloc empreinte inférieur.

En outre, au moins l'un des blocs empreintes peut être monté pivotant autour de l'axe par l'intermédiaire d'au moins un roulement, par exemple un roulement à billes.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un outillage d'injection d'une pièce selon l'invention, en position fermée,
- la figure 2 est une vue en coupe longitudinale et en position ouverte de l'outillage d'injection, les moyens d'éjection étant en position de moulage,
- la figure 3 est une vue correspondant à la figure 2, en position d'éjection des moyens d'éjection,
- les figures 4 et 5 sont des vues en perspective illustrant une partie inférieure du moule, respectivement en position de moulage et en position d'éjection des moyens d'éjection.

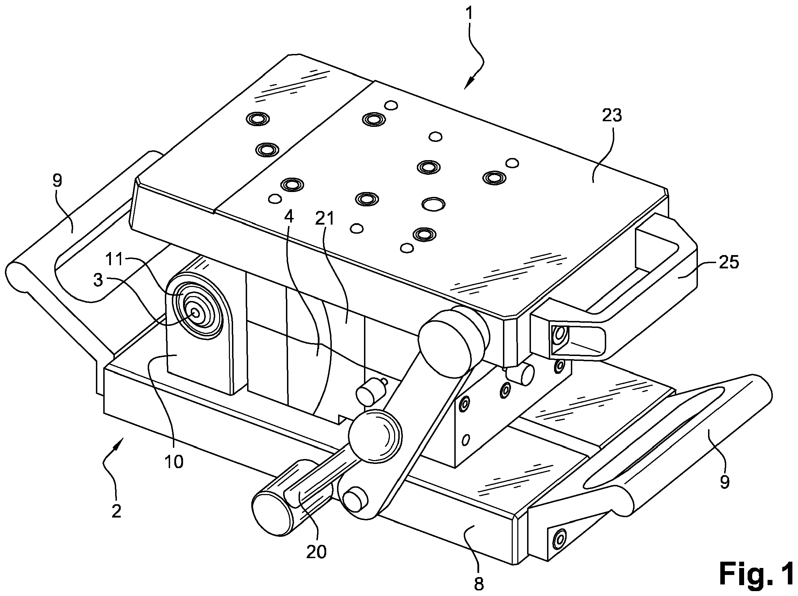

Les figures 1 à 5 représentent un outillage d'injection selon l'invention, comportant une partie supérieure 1 et une partie inférieure 2 montées pivotantes l'une par rapport à l'autre autour d'un axe 3.

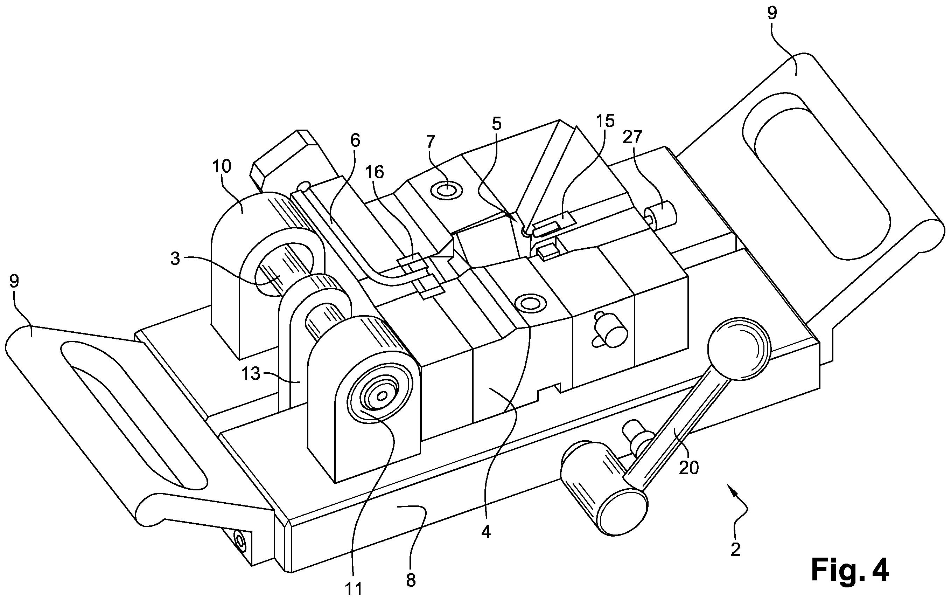

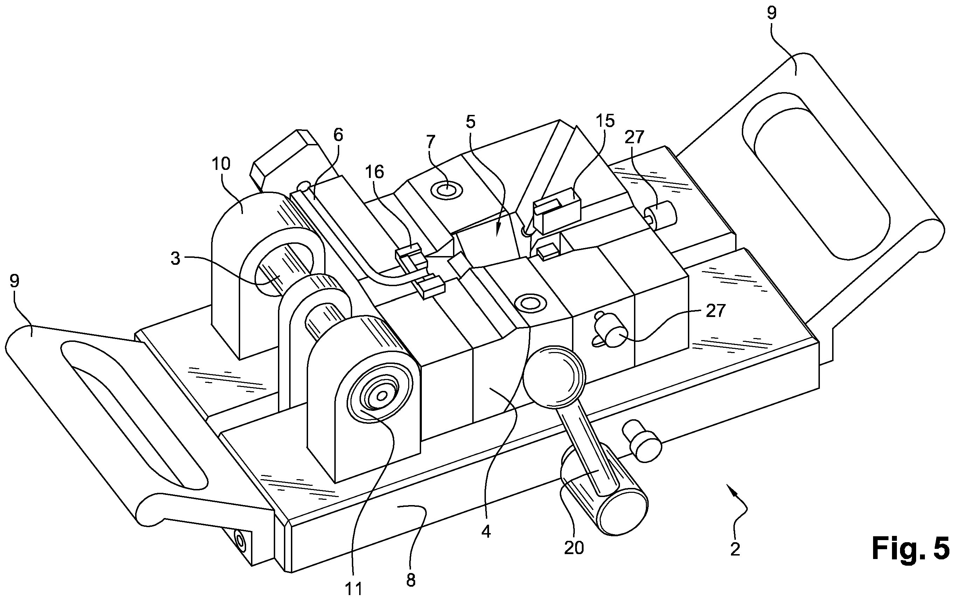

Plus particulièrement, la partie inférieure 2 comporte un bloc empreinte 4 de forme générale rectangulaire, dans laquelle est ménagée une empreinte 5 et un canal d'injection 6, mieux visibles aux figures 4 et 5, montée à l'aide de vis 7 sur une semelle inférieure 8 plane et allongée, de forme également rectangulaire. Les deux extrémités opposées de la semelle 8 sont équipées de poignées 9. La semelle 8 comporte en outre deux oreilles latérales 10, disposées de part et d'autre d'un plan longitudinal médian, et formant une chape à l'intérieur de laquelle est montée l'axe 3. Plus particulièrement, l'axe 3 est guidé par deux roulements à billes 11 montés dans les oreilles 10, et est perpendiculaire au plan médian précité.

La partie inférieure 2 comporte des moyens d'éjection de pièce moulée, comportant un support 12 en forme générale de L, comprenant une première partie 13 dont l'extrémité est montée sur l'axe de pivotement 3 et une seconde partie 14, sensiblement perpendiculaire à la première partie 13, à partir de laquelle s'étendent un premier et un second éjecteurs 15, 16 de forme incurvée. Le premier éjecteur 15 s'étend à partir de l'extrémité libre de la seconde partie 14, le second éjecteur 16 s'étendant entre le premier éjecteur 15 et la première partie 13. Plus particulièrement, les éjecteurs 15, 16 sont en forme d'arc de cercle dont le centre est l'axe de pivotement 3. Les moyens d'éjection s'étendent dans le plan médian précité.

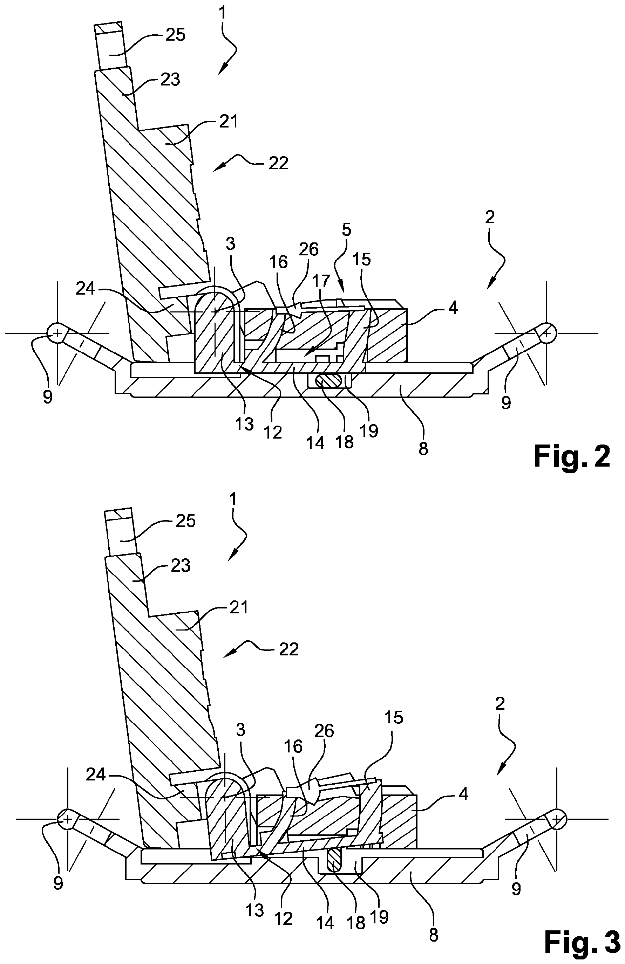

Le bloc empreinte inférieur 4 comporte deux ouvertures incurvées, de formes complémentaires à celles des éjecteurs et traversées par eux, reliées à une zone évidée inférieure 17 (figure 2). Celle-ci ainsi que les ouvertures courbes autorisent le pivotement des moyens d'éjection dans une plage angulaire déterminée, comme cela sera mieux décrit dans ce qui suit.

Une came 18 est logée dans une ouverture 19 de la semelle 8, sous le support 12 des moyens d'éjection, la came 18 étant reliée à une tige s'étendant au travers de la semelle 8 et dont l'extrémité est équipée d'une poignée 20. La rotation de la poignée 20 entraîne donc celle de la came 18 de sorte que cette dernière soit déplaçable entre une position de moulage dans laquelle elle est complètement logée dans la semelle 8 et une position d'éjection dans laquelle elle fait saillie hors de la semelle 8 et pousse sur la face inférieure du support 14 afin de le faire pivoter autour de l'axe 3.

Les moyens d'éjection sont alors déplacés entre une position de moulage dans laquelle les éjecteurs 15, 16 sont à l'extérieur de l'empreinte 5 et sont entièrement logés dans le bloc empreinte (figures 2 et 4), et une position d'éjection dans laquelle les éjecteurs font saillie vers le haut à l'intérieur de l'empreinte (figures 3 et 5).

La partie supérieure 1 de l'outillage d'injection comporte, de la même manière, un bloc empreinte 21 dans lequel est ménagée une empreinte 22, fixé sur une semelle supérieure 23. Cette dernière comporte deux oreilles 24 disposées de part et d'autre du plan médian longitudinal de la semelle 23, formant une chape montée sur l'axe 3. Plus particulièrement, chaque oreille 24 de la semelle supérieure 23 est montée entre la première partie 13 du support 12 des moyens d'éjection et l'une des oreilles 10 de la semelle inférieure 8.

L'extrémité de la semelle supérieure 23 écartée de l'axe de pivotement 3 est équipée d'une poignée 25.

Le procédé de moulage d'un modèle d'aube en cire 26 va maintenant être décrit plus en détail.

Dans le cas où le modèle 26 comporte une partie creuse, telle qu'un circuit de refroidissement, un noyau en céramique (non représenté) est monté dans l'empreinte 5 du bloc empreinte inférieur 4, le noyau pouvant être positionné à l'aide de butées et maintenu à l'aide de vis de pression 27, comme cela est connu en soi.

L'outillage d'injection est ensuite fermé, c'est-à-dire les parties supérieure et inférieure 1, 2 sont pivotées de façon à superposer les deux blocs empreintes 21, 4 et, ainsi, les deux empreintes 22, 5. La forme des empreintes 5, 22, situées alors en regard l'une de l'autre, correspond à celle de la pièce à mouler 26. En particulier, les empreintes 5, 22 définissent la forme d'une aube comportant une pale et une plateforme. La plateforme présente, au moins en ce qui concerne la zone formée par l'empreinte 5 du bloc empreinte inférieur 4, une forme incurvée dont la section est sensiblement un arc de cercle centré sur l'axe de pivotement 3.

Une presse (non représentée) appuie ensuite sur chacune des faces externes des semelles 8, 23 et de la cire est injectée dans les empreintes 5, 22, via le canal d'injection 6, puis refroidie de façon à se solidifier et former un modèle d'aube en cire 26 (figures 2 et 3).

L'outillage d'injection est alors ouvert, par pivotement de la partie supérieure autour de l'axe (figure 2).

Afin d'éjecter le modèle en cire 26 hors de l'empreinte 5 du bloc empreinte inférieur 4, la poignée 20 est actionnée, de façon à faire pivoter la came 18 et, ainsi, les moyens d'éjection. Les éjecteurs 15, 16 se déplacent alors suivant une trajectoire curviligne dont la forme correspond à celle de la plateforme, plus précisément à celle de la zone à extraire de l'empreinte 5.

De cette manière, on évite toute dégradation ou déformation de la plateforme. On garantit ainsi que l'aube obtenue par moulage à la cire perdue, suivant le procédé décrit plus haut, est conforme aux spécifications.

L'outillage d'injection est décrit ici dans le cas d'un moulage d'un modèle en cire 26 mais pourrait être utilisé pour le moulage d'autres types de pièces, afin de résoudre le même problème technique, c'est-à-dire éviter l'endommagement des pièces lors de leur éjection.

## Revendications

1. Outillage d'injection d'une pièce (26), comportant deux blocs empreintes (4, 21) dans lesquels sont ménagées des empreintes (5, 22) dont la forme après superposition des blocs empreintes (4, 21) correspond à celle de la pièce à mouler (26), au moins l'un (4) des blocs empreintes étant équipé de moyens d'éjection de la pièce moulée comportant au moins un éjecteur (15, 16) déplaçable entre une position de moulage dans laquelle il se trouve à l'extérieur de l'empreinte correspondante (5) et une position d'éjection dans laquelle il fait saillie à l'intérieur de l'empreinte (5), **caractérisé en ce que** l'éjecteur (15, 16) est guidé en déplacement entre ses deux positions sur une trajectoire incurvée, par exemple en arc de cercle, dont la forme correspond à celle d'une partie de la pièce moulée (26) à extraire de l'empreinte (5).

2. Outillage selon la revendication 1, **caractérisé en ce que** l'éjecteur (15, 16) a une forme incurvée.

3. Outillage selon la revendication 1 ou 2, **caractérisé en ce que** les deux blocs empreintes (4, 21) sont montés pivotants l'un par rapport à l'autre autour d'un axe (3), entre une position de moulage dans laquelle les deux blocs empreintes (4, 21) sont superposés et une position de démoulage dans laquelle les deux blocs empreintes (4, 21) sont écartés, et **en ce que** les moyens d'éjection comportent un support d'éjecteur (12) dont une extrémité (13) est montée pivotante autour de l'axe de pivotement (3) des blocs empreintes (4, 21) et dont l'autre extrémité est équipée de l'éjecteur (15).

4. Outillage selon la revendication 3, **caractérisé en ce que** l'éjecteur (15, 16) est actionné à l'aide d'une came (18) et/ou d'une poignée (20).

5. Outillage selon la revendication 4, **caractérisé en ce que** la came (18) est en appui contre une face du support (12) de l'éjecteur (15, 16), en un point écarté de l'axe de pivotement (3), de façon à soulever le support (12) et l'éjecteur (15, 16) quand elle est déplacée en rotation.

6. Outillage selon l'une des revendications 1 à 5, **caractérisé en ce que** les moyens d'éjection comportent deux éjecteurs (15, 16) parallèles ou concentriques écartés l'un de l'autre.

7. Outillage selon l'une des revendications 1 à 6, **caractérisé en ce qu'**il comporte un bloc empreinte inférieur fixe (4) et un bloc empreinte supérieur mobile (21), l'éjecteur (15, 16) étant disposé dans le bloc empreinte inférieur (4).

8. Outillage selon la revendication 3, **caractérisé en ce qu'**au moins l'un des blocs empreintes est monté pivotant autour de l'axe (3) par l'intermédiaire d'au moins un roulement, par exemple un roulement à billes (11).

## Patentansprüche

1. Werkzeug zum Spritzgießen eines Teils (26), enthaltend zwei Formhohlraumblöcke (4, 21), in welchen Formhohlräume (5, 22) eingebracht sind, deren Form nach Übereinanderordnung der Formhohlraumblöcke (4, 21) derjenigen des zu formenden Teils (26) entspricht, wobei zumindest einer (4) der Formhohlraumblöcke mit Auswerfeinrichtungen zum Auswerfen des Formteils versehen ist, die zumindest einen Auswerfer (15, 16) enthalten, der zwischen einer Formposition, in welcher er sich außerhalb des entsprechenden Formhohlraums (5) befindet, und einer Auswerfposition, in welcher er in das Innere des Formhohlraums (5) vorspringt, verlagerbar ist, **dadurch gekennzeichnet, dass** der Auswerfer (15, 16) zwischen seinen beiden Positionen über eine beispielsweise kreisbogenförmig gekrümmte Bahn verlagerbar geführt ist, deren Form derjenigen eines Abschnitts des aus dem Formhohlraum (5) zu entnehmenden Formteils (26) entspricht.

2. Werkzeug nach Anspruch 1, **dadurch gekennzeichnet, dass** der Auswerfer (15, 16) eine gekrümmte Form hat.

3. Werkzeug nach Anspruch 1 oder 2, **dadurch gekennzeichnet, dass** die beiden Formhohlraumblöcke (4, 21) zwischen einer Formposition, in welcher die beiden Formhohlraumblöcke (4, 21) übereinandergeordnet sind, und einer Entformposition, in welcher die beiden Formhohlraumblöcke (4, 21) beabstandet sind, um eine Achse (3) zueinander verschwenkbar gelagert sind, und dass die Auswerfeinrichtungen einen Auswerferhalter (12) aufweisen, von dem das eine Ende (13) um die Schwenkachse (3) der Formhohlraumblöcke (4, 21) verschwenkbar gelagert ist und das andere Ende mit dem Auswerfer (15) versehen ist.

4. Werkzeug nach Anspruch 3, **dadurch gekennzeichnet, dass** der Auswerfer (15, 16) mit Hilfe eines Nockens (18) und/oder eines Griffs (20) betätigt wird.

5. Werkzeug nach Anspruch 4, **dadurch gekennzeichnet, dass** der Nocken (18) in Anlage an einer Seite des Halters (12) des Auswerfers (15, 16) an einer von der Schwenkachse (3) beabstandeten Stelle ist, so dass er den Halter (12) und den Auswerfer (15, 16) anhebt, wenn er drehend verlagert wird.

6. Werkzeug nach einem der Ansprüche 1 bis 5, **dadurch gekennzeichnet, dass** die Auswerfeinrichtungen zwei Auswerfer (15, 16) enthalten, die parallel oder konzentrisch verlaufen und voneinander beabstandet sind.

7. Werkzeug nach einem der Ansprüche 1 bis 6, **dadurch gekennzeichnet, dass** es einen feststehenden unteren Formhohlraumblock (4) und einen beweglichen oberen Formhohlraumblock (21) enthält, wobei der Auswerfer (15, 16) in dem unteren Formhohlraumblock (4) angeordnet ist.

8. Werkzeug nach Anspruch 3, **dadurch gekennzeichnet, dass** zumindest einer der Formhohlraumblöcke über ein Lager, beispielweise ein Kugellager (11), um die Achse (3) verschwenkbar gelagert ist.

## Claims

1. Tooling for injection-molding a part (26), the tooling comprising two cavity blocks (4, 21) each having a cavity (5, 22) formed therein of a shape corresponding to the shape of the part (26) that is to be molded once the cavity blocks (4, 21) have been superposed, at least one of the cavity blocks (4) being provided with ejection means for ejecting the molded part and comprising at least one ejector (15, 16) movable between a molding position in which it lies outside the corresponding cavity (5) and an ejection position in which it projects into the cavity (5), the tooling being **characterized in that** the ejector (15, 16) is guided to move between its two positions along a curved path, e.g. a circular path, of shape that corresponds to the shape of a portion of the molded part (26) to be extracted from the cavity (5).

2. Tooling according to claim 1, **characterized in that** the ejector (15, 16) is curved in shape.

3. Tooling according to claim 1 or 2, **characterized in that** the two cavity blocks (4, 21) are mounted to pivot relative to each other about an axis (3) between a molding position in which the two cavity blocks (4, 21) are superposed, and an unmolding position in which the two cavity blocks (4, 21) are spaced apart, and **in that** the ejection means include an ejector support (12) having one end (13) mounted to pivot about the pivoting axis (3) of the cavity block (4, 21) and having its other end provided with the ejector (15).

4. Tooling according to claim 3, **characterized in that** the ejector (15, 16) is actuated with the help of a cam (18) and/or a handle (20).

5. Tooling according to claim 4, **characterized in that** the cam (18) bears against a face of the support (12) of the ejector (15, 16) at a point that is spaced apart from the pivoting axis (3), so as to lift the support (12) and the ejector (15, 16) when the cam is rotated.

6. Tooling according to any one of claims 1 to 5, **characterized in that** the ejection means include two ejectors (15, 16) that are parallel or concentric and spaced apart from each other.

7. Tooling according to any one of claims 1 to 6, **characterized in that** it includes a stationary bottom cavity block (4) and a movable top cavity block (21), the ejector (15, 16) being arranged in the bottom cavity block (4).

8. Tooling according to claim 3, **characterized in that** at least one of the cavity blocks is mounted to pivot about the axis (3) via at least one bearing, e.g. a ball bearing (11).
